# EUROPÄISCHE PATENTSCHRIFT

(11) **EP 1 035 304 B1**
(45) Veröffentlichungstag und Bekanntmachung des Hinweises auf die Patenterteilung: **08.10.2003**
(21) Anmeldenummer: 00102026.2
(22) Anmeldetag: 02.02.2000
(51) Int. Cl.: F01N 3/20, F01N 9/00, H02J 7/14

(54) **Verfahren zum schnelleren Aufheizen eines Katalysators**
Method for the rapid heating of a catalyst
Procédé pour l'échauffement rapide d'un catalyseur

(30) Priorität: 05.03.1999 DE 19909797
(43) Veröffentlichungstag der Anmeldung: 13.09.2000
(73) Patentinhaber: Bayerische Motoren Werke Aktiengesellschaft, 80809 München (DE)
(72) Erfinder: Kriese, Jens, 80933 München (DE)

(56) Entgegenhaltungen:
- US-A- 5 265 418
- PATENT ABSTRACTS OF JAPAN vol. 011, no. 078 (M-570), 10. März 1987 (1987-03-10) & JP 61 234250 A (MAZDA MOTOR CORP), 18. Oktober 1986 (1986-10-18)
- PATENT ABSTRACTS OF JAPAN vol. 1997, no. 08, 29. August 1997 (1997-08-29) & JP 09 093827 A (FUJI HEAVY IND LTD), 4. April 1997 (1997-04-04)
- PATENT ABSTRACTS OF JAPAN vol. 018, no. 044 (M-1547), 24. Januar 1994 (1994-01-24) & JP 05 272395 A (SUZUKI MOTOR CORP), 19. Oktober 1993 (1993-10-19)

## Beschreibung

Die Erfindung betrifft eine Verfahren zum schnelleren Aufheizen eines Katalysators bei einem Verbrennungsmotor gemäß dem Oberbegriff des Anspruchs 1.

Die Anforderungen bezüglich der Abgasemissionen werden immer höher. Von besonderem Interesse ist ein schnelles Erreichen der Konvertierungstemperatur des Katalysators, da nur dann eine optimale Entgiftung des Abgases möglich ist.

Zur schnellen Erreichung einer notwendigen Konvertierungstemperatur des Katalysators ist es bekannt Katalysatorheizungen einzusetzen. Diese sind jedoch teuer und verbrauchen zusätzliche Energie, was sich wiederum in einer zusätzlichen Emission niederschlägt.

Alternativ ist es bekannt, die Leerlaufdrehzahl zu erhöhen, den Zündwinkel zurückzunehmen oder noch zusätzlich Sekundärluft in das Abgas einzublasen. All diese Maßnahmen erhöhen die Abgasenergie, was zu einer schnelleren Beheizung des Katalysators beiträgt.

Aus der US 5,265,418 sowie der JP 61-234250 ist eine Abgassteuerung bekannt, bei denen die Temperatur im Abgaskatalysator dadurch erhöht wird, dass der Verbrennungsmotor mit parasitären Lasten beaufschlagt wird. Durch die erhöhte Belastung des Verbrennungsmotors erhöht sich die Abgastemperatur, wodurch sich auch der Abgaskatalysator schneller aufheizt. In der US 5,265,418 wird die parasitäre Last dann nicht zugeschaltet, wenn eine Batterie über einen bestimmten Grad hinaus entleert ist.

Aufgabe der vorliegenden Erfindung ist es, ein weiteres Verfahren anzugeben, mit dem sich ohne jegliche nachteilige Auswirkungen und auf einfache Weise die Konvertierungstemperatur eines Katalysators schneller erreichen läßt.

Diese Aufgabe wird durch die im Anspruch 1 oder alternativ durch die im Anspruch 2 genannten Merkmale gelöst.

Demgemäß wird gemäß der ersten Alternative der Ladestrom und/oder die Ladespannung zum Aufladen der Batterie wenigstens in Abhängigkeit vom Entladungszustand der Batterie und der Temperatur des Katalysators gewählt. Bei niedriger Katalysatortemperatur wird ein hoher Ladestrom gewählt, der wiederum eine hohe Motorlast bedingt. Damit wird der Verbrennungsmotor beispielsweise im Leerlauf in einem hohen Lastpunkt betrieben. Die dadurch entstehenden hohen Abgasenergien tragen dann zu einer schnellen Aufheizung des Katalysators bei. Um eine Überladung einer Batterie zu verhindern, wird die Aufladung natürlich auch in Abhängigkeit vom Entladungszustand der Batterie durchgeführt.

Gemäß der zweiten Alternative wird nach dem Start des Fahrzeugs und über einen bestimmten Zeitraum ein maximaler Ladestrom und/oder eine maximale Ladespannung zum Aufladen der Batterie gewählt. Der Zeitraum wiederum wird in Abhängigkeit von dem Entladungszustand der Batterie und der Temperatur des Katalysators gewählt.

Gemäß einer vorteilhaften Ausführungsform, kann zusätzlich und in Abhängigkeit von dem Ladestrom oder der Ladespannung die Leerlaufdrehzahl erhöht werden. Dadurch wird eine zusätzliche Anhebung der Abgasenergie erreicht.

Alternativ ist es auch möglich die Leerlaufdrehzahl trotz der hohen Motorlast konstant zu halten, so daß die Fahrzeuginsassen die Auswirkungen der vorgeschlagenen erfindungsgemäßen Regelung nicht bemerken.

Die Realisierung der vorgeschlagenen Erfindung ist einfach. Die Temperatur des Katalysators ist meist durch Verwendung eines Abgastemperaturmodells bekannt. Ferner ist der Entladungszustand der Batterie über die während der Ladung gemessenen Spannungen und Ströme zu ermitteln. Ein Laderegler für eine Batterie stellt die Ladespannung oder den Ladestrom in Abhängigkeit von den vorgenannten Größen ein. Dabei kann der Laderegler diese Eingangsgrößen entweder direkt verarbeiten. Alternativ ist es auch möglich, die Eingangsgrößen Katalysatortemperatur und Entladungszustand der Batterie einem Steuergerät zuzuführen, welches den Laderegler der Batterie in vorgegebener Weise steuert. Eine solche Steuerung kann proportional oder entsprechend den Werten in einem vorgegebenen Kennfeld erfolgen.

Bei der zweiten Alternative der Erfindung wird aufgrund der Eingangsgrößen Katalysatortemperatur und Entladungszustand der Batterie aus einem Kennfeld ein Zeitraum bestimmt. Über diesen Zeitraum wird der Laderegler dann von einem Steuergerät in Richtung eines maximalen Ladestromes eingestellt.

Es erweist sich als besonders vorteilhaft, einen sogenannten Kurbelwellen-Starter-Generator (KSG) als Generator zu verwenden, der gleichzeitig als Anlasser und Generator dient und einen besonders hohen Ladestrom erzeugen kann.

Bei jeder Ausführungsform erhöht sich die Motorlast und damit auch entsprechend die Abgastemperatur. Infolge davon wird auch der Katalysator schneller erwärmt und erreicht eher seine Konvertierungstemperatur.

Das erfindungsgemäße Verfahren hat auch keine nachteiligen Auswirkungen. Es finden keine zusätzlichen Rohemissionen durch eine Wirkungsgradverschlechterung statt. Ferner treten dann keine Probleme im Fahrverhalten auf, wenn die höhere Aufladung der Batterie nur im Leerlauf betrieben wird. Überdies läßt sich das erfindungsgemäße Verfahren einfach in die Motorsteuerung implementieren. Schließlich wird durch ein schnelles Nachladen der Batterie auch die Funktionssicherheit des Verbrennungsmotors, beispielsweise hinsichtlich eines Neustarts, erhöht.

## Patentansprüche

1. Verfahren zum schnelleren Aufheizen eines Katalysators bei einem Verbrennungsmotor, welcher einen Generator umfasst, mit dem eine Batterie wieder aufladbar ist, wobei der Ladestrom und/oder die Ladespannung mittels eines Ladereglers geregelt werden kann, wobei der Ladestrom und/oder die Ladespannung zumindest unmittelbar nach einem Neustart des Verbrennungsmotors wenigstens in Abhängigkeit von der Temperatur des Katalysators und dem Entladezustand der Batterie gewählt wird, **dadurch gekennzeichnet, dass** bei niedriger Katalysator-Temperatur ein hoher Ladestrom zum Aufladen der Batterie gewählt wird und wobei die Aufladung der Batterie in Abhängigkeit vom Entladungszustand durchgeführt wird.

2. Verfahren zum schnelleren Aufheizen eines Katalysators bei einem Verbrennungsmotor, welcher einen Generator umfasst, mit dem eine Batterie wieder aufladbar ist, wobei der Ladestrom und/oder die Ladespannung mittels eines Ladereglers geregelt werden kann, **dadurch gekennzeichnet, dass** der Ladestrom und/oder die Ladespannung zum Aufladen der Batterie über einen vorgebbaren Zeitraum maximal gewählt wird, wobei der Zeitraum in Abhängigkeit von der Temperatur des Katalysators und dem Entladezustand der Batterie gewählt wird.

3. Verfahren nach Patentanspruch 1 oder 2, **dadurch gekennzeichnet, dass** die Leerlaufdrehzahl des Verbrennungsmotors in Abhängigkeit von der durch den Ladestrom entstehenden Motorlast gewählt wird.

4. Verfahren nach Patentanspruch 1 oder 2, **dadurch gekennzeichnet, dass** die Leerlaufdrehzahl unabhängig von der durch den Ladestrom entstehenden Motorlast konstant gehalten wird.

5. Verfahren nach einem der vorhergehenden Ansprüche, **dadurch gekennzeichnet, dass** als Generator ein auf der Kurbelwelle des Verbrennungsmotors angeordneter Kurbelwellen-Starter-Generator (KSG) verwendet wird.

## Claims

1. A method for more rapid heating of a catalytic converter in an internal-combustion engine comprising a generator, with which a battery can be recharged, wherein the charging current and/or the charging voltage can be controlled by means of a charge regulator, wherein the charging current and/or the charging voltage is selected at least directly after starting the internal-combustion engine at least as a function of the temperature of the catalytic converter and the discharge state of the battery, **characterised in that** a high charging current is selected to charge the battery when the catalytic converter temperature is low and wherein the battery is charged as a function of the discharge state.

2. A method for more rapid heating of a catalytic converter in an internal-combustion engine comprising a generator, with which a battery can be recharged, wherein the charging current and/or the charging voltage can be controlled by means of a charge regulator, **characterised in that** the charging current and/or the charging voltage to charge the battery is selected to be maximum over a preselectable time period, the time period being selected as a function of the temperature of the catalytic converter and the discharge state of the battery.

3. A method according to claim 1 or 2, **characterised in that** the idling speed of the internal-combustion engine is selected as a function of the engine load produced by the charging current.

4. A method according to claim 1 or 2, **characterised in that** the idling speed is kept constant independently of the engine load produced by the charging current.

5. A method according to any one of the preceding claims, **characterised in that** a crankshaft starter generator (CSG) arranged on the crankshaft of the internal-combustion engine is used as the generator.

## Revendications

1. Procédé pour l'échauffement rapide d'un catalyseur d'un moteur à combustion interne qui comprend un générateur avec lequel une batterie est rechargeable, le courant de charge et/ou la tension de charge pouvant être régulés au moyen d'un régulateur de charge, en choisissant le courant de charge et/ou la tension de charge au moins immédiatement après un nouveau démarrage du moteur à combustion interne, au moins en fonction de la température du catalyseur et de l'état de décharge de la batterie,
**caractérisé en ce que**
pour une basse température de catalyseur, on choisit un fort courant de charge pour charger la batterie, la charge de la batterie étant réalisée en fonction de l'état de décharge.

2. Procédé pour l'échauffement rapide d'un catalyseur d'un moteur à combustion interne qui comprend un générateur avec lequel une batterie est rechargeable, le courant de charge et/ou la tension de charge peuvent être régulés par un régulateur de charge,
**caractérisé en ce que**
le courant de charge et/ou la tension de charge pour charger la batterie sont choisis à un niveau maximal pendant un laps de temps pouvant être prescrit, le laps de temps étant choisi en fonction de la température du catalyseur et de l'état de décharge de la batterie.

3. Procédé selon la revendication de brevet 1 ou 2,
**caractérisé en ce que**
la vitesse de rotation en fonctionnement à vide du moteur à combustion interne est choisie en fonction de la charge du moteur créée par le courant de charge.

4. Procédé selon la revendication de brevet 1 ou 2,
**caractérisé en ce que**
la vitesse de rotation en fonctionnement à vide est maintenue constante indépendamment de la charge du moteur créée par le courant de charge.

5. Procédé selon l'une quelconque des revendications précédentes,
**caractérisé en ce qu'**
en tant que générateur, on utilise un démarreur/générateur de vilebrequin disposé sur le vilebrequin du moteur à combustion interne.
